# EUROPEAN PATENT APPLICATION

(11) **EP 4 525 148 A1**
(43) Date of publication of application: **19.03.2025**
(21) Application number: 23306531.7
(22) Date of filing: 15.09.2023
(51) Int. Cl.: H01M 50/147, H01M 50/103, H01M 50/15, H01M 50/342

(54) **A PRISMATIC BATTERY CELL COMPRISING A VENTING MEMBRANE**

(71) Applicant: Automotive Cells Company SE, 33520 Bruges (FR)
(72) Inventor: CHOI, Hangjune, 33200 Bordeaux (FR)
(74) Representative: Alatis

(57) **Abstract**

The invention relates to a cover plate (3) of a top cover (5) of an electrochemical battery cell (1) comprising a positive terminal (6) and a negative terminal (7), the cover plate (3) comprising an internal edge (9) delimiting a venting hole (8) having an oblong shape extending along a longitudinal reference axis (X) and closed by a venting membrane (10) comprising a weakness line (16) extending longitudinally along the center of the venting membrane (10). The cover plate comprises a stress means (14, 27, 28) configured to concentrate a tensile residual stress in a desired breaking point (32) of the weakness line (16) to break it while an internal gas pressure inside the can (2) increase up to a threshold of pressure deforming the venting membrane (10).

## Description

### TECHNICAL FIELD OF THE INVENTION

The invention generally relates to the technical field of energy storage devices, and in particular to an electrochemical battery cell comprising a venting membrane.

Electrochemical battery cells are used in electric or hybrid vehicles, i.e., those which move at least partially by electrical energy, for example.

### PRIOR ART

Motor vehicles with electric or hybrid traction or propulsion comprise one or more battery modules connected to a power network for powering an electric (traction or propulsion) motor.

The battery modules are grouped together in a casing and then form a battery pack, this casing generally containing a mounting interface and connection terminals.

Each battery module comprises at least one electrochemical battery cell generating current by chemical reaction, for example, of the lithium-ion (or Li-ion) type, or of the Ni-MH, or Ni-Cd or lead acid type.

An electrochemical battery cell comprises, in particular, an electrode stack(s) comprising multiple positive electrodes, multiple separator layers, and multiple anode electrodes. The cathodes form (+) electrical pole of the stack combining all the cathodes electrically, and the anodes form (-) electrical pole of the stack combining all the anodes electrically, and all the cathodes and anodes in the stack are electrically separated by the separator layers. The combined cathodes connect to the positive terminal of the electrochemical battery cell, and the combined anodes connect to the negative terminal of the electrochemical battery cell.

It is known to assemble, in series and/or in parallel, a plurality of electrochemical battery cells in order to produce the battery modules using interconnection devices ensuring electrical contact between the terminals of two neighboring electrochemical battery cells.

The electrode stack(s) is housed in a metal housing. The housing is generally made of aluminum. Once the assembly of electrode stack(s) is integrated into the housing, a top cover comprising a plate is laser-welded to the housing to produce the structural connection and the sealing of the electrochemical battery cell.

The top cover comprises a positive terminal, a negative terminal and (a) venting hole(s), positioned nearby the two terminals, closed by a venting membrane. The venting membrane comprises a peripheral border attached to the plate. The venting membrane is leak-tightly sealed with an internal edge of the plate delimiting the venting hole. The venting membrane is welded to the internal edge around the entire perimeter of the venting hole.

The venting hole and the venting membrane form a venting window having an elongated shape. Classically, the venting window has an oblong shape including a first end and an opposite second end having both a convex curvature. The shape of the venting window comprises two parallel identical straight lines connecting tangentially two identical mirrored arcs. The arcs have the shape of half circles and are opposed to each other. The two parallel identical straight lines are opposed to each other as well.

A weakness line or pre-cracked notch extends longitudinally along the venting membrane.

The membrane has a safety function. The stack of electrodes can release gases due to chemical reactions leading to an increase of the pressure inside the electrochemical battery cell. If the internal gas pressure of the electrochemical battery cell reaches a critical pressure abnormally, the venting membrane gets the pressure and deforms in such a way as to increase the stress higher at the pre-cracked notch. If the stress passes its strength limit at any point of the notch, the point triggers the membrane breakage, and the internal gas gets released leading to securing the electrochemical battery cell and avoiding an explosion.

The pre-cracked notch is rather long. The breakage can occur at any point of the pre-cracked notch. There is no targeted point to initiate the opening/breakage of the venting membrane, which may cause a wide variance in the critical pressure which triggers the opening of the venting window for releasing internal high-pressure gases. Therefore, the triggering pressure or critical pressure may vary widely from cell to cell, which means the safety function works in a widely deviated way.

### DISCLOSURE OF THE INVENTION

The invention aims to remedy all or some of the drawbacks of the prior art by proposing an electrochemical battery cell improving the safety function of the opening of the venting membrane.

To do this, the invention proposes a cover plate of a top cover of an electrochemical battery cell. The electrochemical battery cell comprises a positive terminal and a negative terminal. The cover plate comprises a venting hole with an internal edge delimiting the venting hole having an oblong shape extending along a longitudinal reference axis and closed by a venting membrane comprising a weakness line extending longitudinally along the center of the venting membrane.

The cover plate comprises a stress means configured to concentrate tensile stress in a desired breaking point of the weakness line to initiate a break from the breaking point while an internal gas pressure inside the can increase up to a threshold of pressure deforming the venting membrane.

The invention thus provides an electrochemical battery cell, improving the safety function of the opening of the venting membrane in a more precise way.

A target point on the weakness line of the membrane is provided to initiate the breakage of the venting membrane at a desired point. Therefore, the safety function of the opening of the venting membrane is more precisely reproducible at the targeted/designed pressure with a minor variance from cell to cell.

It is possible to manufacture cells having a critical pressure of breakage of the venting membrane in a smaller deviation range, which means that the safety function of gas release happens at a more uniform pressure level for each electrochemical battery cell. Said differently, all the venting membranes of the electrochemical battery cells can break at the same critical pressure because the position of the breaking point in the venting membranes is the same due to the stress means.

According to one embodiment, the internal edge comprises two sectors of arcuate profile, preferably of circular profile, facing each other. The weakness line of the venting membrane has a middle positioned at an equal distance from the two sectors of arcuate profile. The desired breaking point of the weakness line is positioned in the middle of the weakness line.

It enables to provide a tensile stress higher around the center of the weakness line. The breakage of the membrane may start at the center with a higher probability.

According to one embodiment, the two sectors of arcuate profile are symmetrical about an axis of symmetry. The axis of symmetry is preferably transverse to the longitudinal reference axis.

This configuration provides a tensile stress distribution along the weakness line in a symmetric shape, which is higher than the average stress at the center and lower at the locations away from the center.

According to one embodiment, the stress means comprises a shrinkage area formed in the venting hole.

This provides a simple solution to generate residual tensile stress higher around the center of the weakness line.

According to one embodiment, the two sectors of arcuate profile are separated by two concave portions facing each other so as to delimit the shrinkage area. The two concave portions have preferably an arcuate profile, preferably also a circular profile.

This shape enables the concentration of the tensile stress between the two arcuate profiles.

According to one embodiment, the two concave portions are symmetrical about an axis of symmetry. The axis of symmetry is preferably coaxial to the longitudinal reference axis.

This enables concentrate the concentration of the tensile stress at the center of the membrane.

According to one embodiment, the curvature radius ratio between the two sectors of arcuate profile of the concave portions and the two sectors of circular profile is greater than 15, preferably greater than 20, and/or less than 30, preferably less than 25.

According to one embodiment, the venting membrane has the same shape as that of the venting hole and comprises a shrinkage area.

According to one embodiment, the venting membrane is bordered by a peripheral border having a shape so that a shape of the venting membrane corresponding to an homothety of the shape of the venting hole.

According to one embodiment, the stress means comprise a plurality of recesses, preferably an even number of recesses, for example two, formed in the venting membrane. The recesses are positioned on either side of the weakness line.

The recesses help to start the breakage at the desired breaking point with a higher probability. When used with the shrinkage area of the venting hole, the probability that the breakage start at the desired breaking point is very high.

According to one embodiment, each recess has a circular section.

This shape provides is optimal for starting the breakage of the weakness line.

According to one embodiment, the recesses are positioned closer to the weakness line than the venting membrane's peripheral border.

This position is optimal for providing residual tensile stress around the center of the weakness line with high reproducibility for all the electrochemical battery cells.

According to one embodiment, the recesses are aligned with the middle of the weakness line and/or are symmetrical about the weakness line.

Due to the residual tensile stress higher around the center of the weakness line, the breakage may start at the center with a higher probability.

The invention also relates to an electrochemical battery cell comprising a cover plate as defined previously.

### BRIEF DESCRIPTION OF THE FIGURES

Other features and advantages of the invention will become apparent by reading the following description, with reference to the appended Figures, which show:
- Figure 1: A schematic view of an electrochemical battery cell according to one embodiment of the invention;
- Figure 2: A schematic exploded view of a top cover of the electrochemical battery cell of Figure 1;
- Figure 3: A schematic view of a plate of the top cover of Figure 2;
- Figure 4: A schematic view of a transversal section of the top cover;
- Figure 5: A schematic view of a membrane of an electrochemical battery cell according to another embodiment of the invention.

For greater clarity, identical or similar elements are identified by identical reference signs in all Figures.

### DETAILED DESCRIPTION OF AN EMBODIMENT

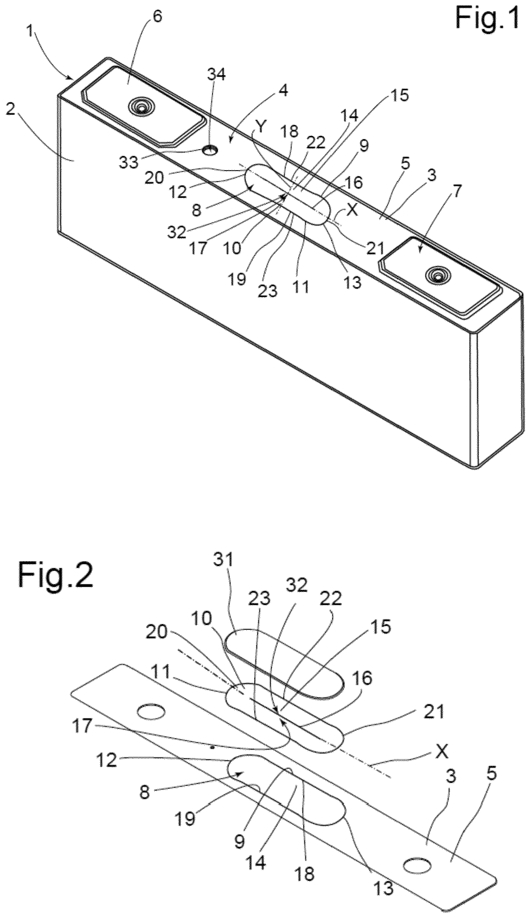

The invention relates to an electrochemical battery cell **1,** as shown in Figure 1, which can be used, for example, in an electric or hybrid vehicle, i.e., one which moves at least partially by electrical energy, for example.

An electrochemical battery cell **1** comprises, in particular, an electrode stack(s) comprising multiple positive electrodes, multiple separator layers, and multiple anode electrodes. The cathodes form the (+) electrical pole of the stack combining all the cathodes electrically, and the anodes form the (-) electrical pole of the electrode stack combining all the anodes electrically, and all the cathodes and anodes in the stack are electrically separated by the separator layers. The combined cathodes connect to the positive terminal **6** of the electrochemical battery cell **1**, and the combined anodes connect to the negative terminal **7** of the electrochemical battery cell **1.**

It is known to assemble, in series and/or in parallel, a plurality of electrochemical battery cells **1** in order to produce battery modules using the interconnection devices ensuring electrical contact between the terminals of two neighboring electrochemical battery cells **1.**

In order to mechanically assemble the electrically connected electrochemical battery cells **1**, it is known to align them on a flat support or a rail and keep them at the two ends compressed by fixed parallel plates, such an assembly being designated by the term "module".

A plurality of modules is grouped together in a casing and then form a battery pack, this casing generally contains a mounting interface and connection terminals.

Each electrode stack is accommodated in a metallic can **2** which is generally made of aluminum and is hollow. Once the assembly of electrode stack(s) is integrated into the can **2**, a top cover **3**, comprising a metallic plate **5**, is laser-welded to the can **2**, for closing an upper opening **4** of the can **2.**

The electrochemical battery cell **1** has a parallelepipedal shape of a rectangular cross-section. The top cover **3** comprises the positive terminal **6** and a negative terminal **7.**

A venting hole **8** is formed in the plate **5** and positioned between the two terminals 6, 7. The venting hole 8 has an oblong shape extending along a longitudinal reference axis **X.** The venting hole **8** is delimited by an internal edge **9** of the plate **5** and is closed by a venting membrane **10.**

Alternatively, the venting hole **8** could be positioned differently on the plate 5 or being positioned on another wall of the can **2.**

The venting membrane **10** comprises a peripheral border **11** attached to the plate **5.** The venting membrane **10** is leak-tightly sealed with the internal edge **9.** The venting membrane **10** is welded to the internal edge **9** around the entire perimeter of the venting hole **8.**

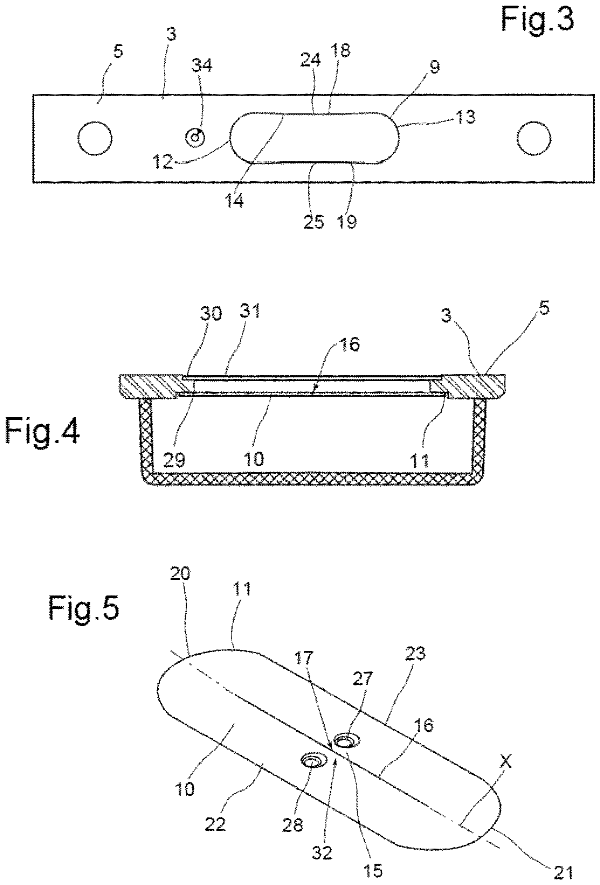

As shown in Figure 4, the internal edge **9** of the plate **5** comprises a lower shoulder **29** and an upper shoulder **30** positioned above the lower shoulder **29.** The venting membrane **10** is sealed on the lower shoulder **29.**

The top cover **3** comprises a vent cover **31** positioned in front of and above the venting membrane **10.** The vent cover **31** is fixed on the upper shoulder **30** of the internal edge **9** of the plate **5.** The vent cover **31** and the venting membrane **10** are spaced out.

The vent cover **31** can have the same shape as the venting membrane **10** and the venting hole **8** or have a different shape, as an oblong or elliptical shape for instance.

The venting hole **8** and the venting membrane **10** form a venting window having an elongated shape.

A weakness line **16** or pre-cracked notch extends longitudinally along the venting membrane **10** as shown in figures 1 to 3. The weakness line **16** extends along a longitudinal reference axis **X.**

The venting membrane **10** has a safety function. The stack of electrodes can release gases due to chemical reactions leading to increase the pressure inside the electrochemical battery cell **1.** If the internal pressure of the electrochemical battery cell **1** reaches a critical pressure, the venting membrane **10** gets the pressure and deforms in such a way as to increase the stress higher at the weakness line **16.** If the stress passes its strength limit at any point of the weakness line **1**6**,** the point triggers the venting membrane **10** breakage, and the internal pressure gets released leading to secure the electrochemical battery cell **1** and avoiding an explosion.

The internal edge **9** of the plate **5** comprises two sectors of arcuate profile **12**, **13**, preferably of circular profile, facing each other.

The two sectors of arcuate profile **12**, **13** have a convex shape and are symmetrical about an axis of symmetry **Y.** The axis of symmetry **Y** is preferably transverse to the longitudinal reference axis **X.**

The venting membrane **10** has the same shape as the venting hole **8** in the example of figures 1 to 4. The venting membrane **10** comprises a first curved end **20** attached to a first arcuate profile **12** of the internal edge **9** and a second curved end **21** attached to a second arcuate profile **13** of the internal edge **9.**

Alternatively, the venting membrane **10** can have a different shape than that of the venting hole **8** as an oblong and elongated shape.

For instance, the first and second curved ends **20**, **21** of the venting membrane **10** can comprise both a convex curvature. The venting membrane **10** comprises two parallel identical straight lines connecting tangentially the two identical curved ends **20**, **21**. The first and second curved ends **20**, **21** have a shape of half circles and are opposed to each other. The two parallel identical straight lines are opposed to each other as well.

In the example of Figures 1 to 4, the weakness line **16** of the venting membrane **10** comprises a middle **17** positioned at equal distance from the two sectors of arcuate circular profile **12**, **13**.

The top cover **3** comprises a stress means **14**, **27**, **28** configured to concentrate a tensile stress in the middle **17** of the weakness line **16** to break it while an internal gas pressure inside the can **2** increases up to a threshold of pressure (or critical pressure) deforming the venting membrane **10.**

The stress means **14**, **27**, **28** provides a target point on the weakness line **16** of the venting membrane **10** to initiate the breakage of the venting membrane **10** at a desired breaking point **32** of the weakness line **16.** Therefore, the safety function of the breaking of the venting membrane **10** is more precisely reproducible at the targeted/designed pressure (threshold of pressure) with a minor variance from electrochemical battery cell **1** to electrochemical battery cell **1.**

According to an embodiment, the desired breaking point **32** of the weakness line **16** is positioned in the middle **17** of the weakness line **16.**

According to a preferred embodiment as illustrated in figures 1 to 4, the stress means **14**, **27**, **28** is provided by a particular shape of the venting hole **8.**

The stress means **14**, **27**, **28** comprises a shrinkage area **14** formed in the venting hole **8.**

The internal edge **9** of the plate **5** comprises two concave portions **18**, **19** facing each other so as to delimit the shrinkage area **14.**

The two sectors of arcuate profile **12**, **13** are separated by the two concave portions **18**, **19**. The two concave portions **18**, **19** have preferably an arcuate profile. The two concave portions **18**, **19** have preferably a circular profile. Alternatively, the two concave portions **18**, **19** can have an elliptical profile.

The two concave portions **18**, **19** have a curvature radius smaller than the two sectors of arcuate profile **12**, **13**.

The two concave portions **18**, **19** of the internal edge **9** of the plate **5** have each a tangent point **24**, **25**, as shown in figure 3, that is the point of the two concave portions **18**, **19** which is positioned closest to the weakness line **16**. The tangent points **24**, **25** are aligned with the middle **17** of the weakness line **16**.

In other words, the two concave portions **18**, **19** of the internal edge **9** of the plate **5** protrude towards the middle **17** of the weakness line **16.**

The curvature radius ratio between the two concave portions **18**, **19** and the two sectors of circular profile **12**, **13** of the internal edge **9** of the plate **5** is greater than 15, preferably greater than 20, and/or less than 30, preferably less than 25 for a prismatic battery cell design which has, in particular, 34 mm thickness and 200 mm length, but not limited to.

The curvature radius of the two sectors of circular profile **12**, **13** of the internal edge **9** of the plate **5** is greater than 8 mm, preferably greater than **10** mm, and/or less than 15 mm, preferably less than 13 mm for a prismatic battery cell design which has, in particular, 34 mm thickness and 200 mm length, but not limited to.

The radius of the two concave portions **18**, **19** of the internal edge **9** of the plate 5 is greater than 220 mm, preferably greater than 230 mm, and/or less than 260 mm, preferably less than 250 mm for a prismatic battery cell design which has, in particular, 34 mm thickness and 200 mm length, but not limited to.

Preferably, the venting membrane **10** has a same shape than that of the venting hole **8** and comprises also a shrinkage area **15.**

The venting membrane **10** is bordered by a peripheral border **11** having a shape so that the venting membrane **10** corresponding to an homothety of the shape of the venting hole **8.**

The peripheral border **11** of the venting membrane **10** comprises a third curved end **22** and a fourth curved end **23** having both a concave curvature. The third curved end **22** extends along the first concave portion **18** of the internal edge **9** of the plate **5** and the second curved end **23** extends along the second concave portion **19** of the internal edge **9** of the plate **5.**

The third and fourth curved ends **22**, **23** are opposed and separated by the weakness line **16.** The third and fourth curved ends **22**, **23** have a curvature radius smaller than the curvature radius of the first and second curved ends **20**, **21**.

The curved ends **20**, **21**, **22**, **23** of the venting membrane **10** have a circular shape.

The venting membrane 10 and the venting hole 8 form a venting window having approximately a bean shape.

Alternatively, the venting membrane 10 has a different shape than that of the venting hole 8, as said previously, and does not comprise a shrinkage area 15.

Thus, the pressure inside the electrochemical battery cell 1 increases while the stack of electrodes releases gases due to chemical reactions. When the internal pressure of the electrochemical battery cell 1 reaches the threshold of pressure, the venting membrane **10** deforms in such a way as to increase the stress higher at the middle **17** of the weakness line **16** due to the two concave portions **18**, **19** that are protruding towards the middle **17** of the weakness line **16** of the venting hole **8.**

When the stress passes the threshold of pressure in the middle **17** of the weakness line **16**, the point at the middle **17** of the weakness line **16** breaks due to the stress applied on the venting membrane **10** by the two concave portions **18**, **19.** The internal pressure thus gets released leading to secure the electrochemical battery cell **1** and avoiding an explosion.

According to another embodiment, the stress means **14**, **27**, **28** comprise a plurality of recesses **26**, **27,** preferably an even number of recesses **26**, **27** for example two as illustrated in the example of the figure 5, formed in the venting membrane **10'.**

The electrochemical battery cell **1** is identical as one of the embodiments illustrated in the figures 1 to 4 except that the venting membrane **10'** has a different shape.

The venting membrane **10'** comprises a first curved end **20** attached to a first arcuate profile **12** of the internal edge **9** and a second curved end **21** attached to a second arcuate profile **13** of the internal edge **9.**

The first and second curved ends **20**, **21** of the venting membrane **10'** have both a convex curvature. The venting membrane **10'** comprises two parallel identical straight lines connecting tangentially the two identical curved ends **20**, **21**. The first and second curved ends **20**, **21** have a shape of half circles and are opposed to each other. The two parallel identical straight lines are opposed to each other as well.

The recesses **26**, **27** are positioned on either side of the weakness line **16.**

The two recesses **26**, **27** are identical and have a circular section.

The recesses **26**, **27** are positioned nearest to the weakness line **16** than to the peripheral border **11** of the venting membrane **10'.**

The recesses **26**, **27** are positioned at equal distance from the first and the second curved ends **20**, **21** of the venting membrane **10'** and aligned with the middle **17** of the weakness line **16.**

The recesses **26**, **27** are symmetrical with respect to the weakness line **16.**

Alternatively, more than two recesses **26**, **27** can be formed on the venting membrane **10'.**

Alternatively, the recesses **26**, **27** can be positioned asymmetrically with respect to the weakness line **16.**

The recesses **26**, **27** are formed by a stamping operation on the venting membrane **10'.**

For a particular case of a venting membrane **10'** having 0,3 mm thickness, 24 mm width and 70 mm length, two recesses **26**, **27** in 3 mm diameter and 1,0 mm depth are preferable for serving their objective of introducing tensile residual stress in the venting membrane **10'.**

Thus, the pressure inside the electrochemical battery cell **1** increases while the stack of electrodes releases gases due to chemical reactions. When the internal pressure of the electrochemical battery cell **1** reaches the threshold of pressure, the venting membrane **10'** deforms in such a way as to increase the stress higher at the middle **17** of the weakness line **16** due to the two recesses **26**, **27**.

When the stress passes the threshold of pressure at the middle **17** of the weakness line **16**, the point at the middle **17** of the weakness line **16** breaks, and the internal pressure gets released leading to secure the electrochemical battery cell **1** and avoiding an explosion.

The venting window with the bean shape (shrinkage area **14** formed in the venting hole **8**) and the two recesses **26**, **27** can be used independently or in combination. The stress means **14**, **27**, **28** can comprise a plurality of recesses **26**, **27** and a shrinkage area **14** formed in the venting hole **8** and as described previously.

For the two embodiments, the top cover **3** comprises a filling hole cap **33** closes leak-tightly a filling hole **34** after a final filling of an electrolyte inside the electrochemical battery cell **1.** The filling hole **34** is positioned between the positive terminal **6** and the venting membrane **10**, **10'**, for instance.

Of course, the invention is described in the foregoing by way of example. It is understood that a person skilled in the art is able to produce different variant embodiments of the invention without departing from the scope of the invention.

It is emphasized that all of the features, as they are taught to the person skilled in the art from the present disclosure, drawings and attached claims, even though specifically they have been described in relation to other determined features, both individually and in any combinations, may be combined with other features or feature groups disclosed herein, as long as not expressly excluded and no technical circumstances make such combinations impossible or nonsensical.

## Claims

1. A cover plate (3) of a top cover (5) of an electrochemical battery cell (1) comprising a positive terminal (6) and a negative terminal (7), the cover plate (3) comprising a venting hole (8) with an internal edge (9) delimiting the venting hole (8) having an oblong shape extending along a longitudinal reference axis (X) and closed by a venting membrane (10, 10') comprising a weakness line (16) extending longitudinally along the center of the venting membrane (10, 10'), **characterized in that** it comprises a stress means (14, 27, 28) configured to concentrate a tensile stress in a desired breaking point (32) of the weakness line (16) to initiate a break from the breaking point (32) while an internal gas pressure inside the can (2) increase up to a threshold of pressure deforming the venting membrane (10, 10').

2. A cover plate (3) according to claim 1, **characterized in that** the internal edge (9) comprises two sectors of arcuate profile (12, 13), preferably of circular profile, facing each other, the weakness line (16) of the venting membrane(10) having a middle (17) positioned at an equal distance from the two sectors of arcuate profile (12, 13), the desired breaking point (32) of the weakness line (16) being positioned in the middle (17) of the weakness line (16).

3. A cover plate (3) according to claim 2, **characterized in that** the two sectors of arcuate profile (12, 13) are symmetrical about an axis of symmetry (Y), said axis of symmetry (Y) preferably being transverse to the longitudinal reference axis (X).

4. A cover plate (3) according to any one of claims 1 to 3, **characterized in that** the stress means (14, 27, 28) comprises a shrinkage area (14) formed in the venting hole (8).

5. A cover plate (3) according to claim 4, **characterized in that** the two sectors of arcuate profile (12, 13) are separated by two concave portions (18, 19) facing each other so as to delimit the shrinkage area (14), said two concave portions (18, 19) preferably having an arcuate profile, preferably also having a circular profile.

6. A cover plate (3) according to claim 5, **characterized in that** the two concave portions are symmetrical about an axis of symmetry, said axis of symmetry preferably being coaxial to the longitudinal reference axis (X).

7. A cover plate (3) according to any one of claims 1 to 6, **characterized in that** the venting membrane (10, 10') has the same shape as that of the venting hole (8) and comprises a shrinkage area (15).

8. A cover plate (3) according to claim 7, **characterized in that** the venting membrane (10, 10') is bordered by a peripheral border (11) having a shape so that a shape of the venting membrane (10, 10') corresponding to an homothety of the shape of the venting hole (8).

9. A cover plate (3) according to any one of claims 1 to 8, **characterized in that** the stress means (14, 27, 28) comprises a plurality of recesses (26, 27), preferably an even number of recesses (26, 27), for example two, formed in the venting membrane (10, 10'), the recesses (26, 27) being positioned on either side of the weakness line (16).

10. A cover plate (3) according to claim 9, **characterized in that** each recess (26, 27) has a circular section.

11. A cover plate (3) according to any one of claims 9 or 10, **characterized in that** the recesses (26, 27) are positioned closer to the weakness line (16) than to the peripheral border (11) of the venting membrane (10, 10').

12. A cover plate (3) according to any one of claims 9 to 11, **characterized in that** the recesses (26, 27) are aligned with the middle (17) of the weakness line (16) and/or are symmetrical about the weakness line (16).

13. An electrochemical battery cell (1) **characterized in that** it comprises a cover plate (3) according to any one of claims 1 to 12.
